# EUROPEAN PATENT SPECIFICATION

(11) **EP 1 589 832 B1**
(45) Date of publication and mention of the grant of the patent: **05.10.2011**
(21) Application number: 03706044.9
(22) Date of filing: 03.02.2003
(51) Int. Cl.: A23L 1/16

(54) **DOUGH COMPOSITIONS COMPRISING ENCAPSULATED ORGANIC ACID AND NATURAL ANTIMICROBIAL AGENT**
TEIGZUSAMMENSETZUNG ENTHALTEND EINGEKAPSELTE ORGANISCHE SÄURE UND ANTIMIKROBIELLEN WIRKSTOFF
COMPOSITIONS DE PATE A CUISSON COMPRENANT UN ACIDE ORGANIQUE ENCAPSULE ET UN AGENT ANTIMICROBIEN NATUREL

(43) Date of publication of application: 02.11.2005
(60) Divisional application: 10181275.8
(73) Proprietor: GENERAL MILLS, INC., Minneapolis Minnesota 55426 (US)
(72) Inventor: KARGEL, Colleen, B., Chisago, MN 55013 (US); GRIEBEL, Jonathan, Mark, Maple Grove, MN 55311 (US)
(74) Representative: Vossius & Partner
(86) International application number: PCT/US2003/003109
(87) International publication number: WO 2004/068967

(56) References cited:
- EP-A- 0 807 386
- EP-A- 1 230 861
- WO-A-99/08553
- WO-A-03/005963
- FR-A- 2 071 001
- FR-A- 2 120 497
- US-A- 4 416 904
- US-A- 4 597 976
- US-A- 4 659 576
- DATABASE WPI Derwent Publications Ltd., London, GB; AN 1985-078013 XP002255918 "bread preparation" & JP 60 030634 A (RIKEN VITAMIN OIL), 16 February 1985 (1985-02-16)

## Description

The invention relates to dough compositions, dough products, and methods of making and using the same, including pasteurized and non-pasteurized dough compositions and dough products that include encapsulated organic acid and natural antimicrobial agent, wherein the natural antimicrobial agent comprises a secondary fermentation by-product selected from lantibiotics.

Food storage is in constant competition with food spoilage. There is always a need to preserve food products, i.e., extend food shelf-life, until a food product is consumed.

Preservation of food products in general can be achieved using a variety of approaches. Physical manipulations of food products that have a preservative effect include, for example, freezing, refrigerating, cooking, retorting, ionizing radiation, pasteurizing, drying, vacuum parking, and sealing in an oxygen-free package. Some of these approaches can be part of a food processing operation. Food processing steps preferably are selected to strike a balance between obtaining a microbially-safe food product, and producing a food product with desirable qualities such as taste and texture.

Food preservation can also be accomplished by including an additive in a food product, such as a preservative. But, while food additives can be effective at providing a microbially safe food product, some consumers disfavor non-natural food additives such as chemical preservatives. Natural preservatives such as organic acids and spices and herbs are perceived to be more desirable.

Other natural preservation methods include biocontrol preservation. Biocontrol preservation generally describes the use of nonpathogenic microorganisms and their by-products to inhibit or control pathogenic or toxin-producing microorganisms in food products. The selected microorganism or by-product replaces added chemical preservatives. The most familiar form of biocontrol preservation is found in fermented food products such as yogurt. The microorganisms used to ferment yogurt provide not only the desired taste and texture of yogurt but also produce metabolites that inhibit the growth of other microorganisms. The use of biocontrol preservation also can be used in non-fermented foods such as milk, meat and meat products, fruits, vegetables and liquid whole eggs.

Due to the time constraints of modern life, there is increased demand for high quality dough compositions and dough products that are easy to prepare, e.g., by simply heating or cooking using a stove or conventional or microwave oven. Easy to prepare dough compositions and dough products may be provided by making a raw, cooked, or partially cooked dough composition or dough product and then preserving it until a final processing step such as cooking (e.g., baking, trying, or boiling, etc.) or heating by the consumer.

In general, many examples of such dough compositions and dough products may be preserved by refrigeration. Optionally, such dough products can be pasteurized during preparation or prior to or at the time of packaging. Thus, a typical combination of preservation methods may include a heating (e.g., pasteurization) step and a subsequent refrigeration step. Exemplary refrigerated dough products include dumplings and dough composition pockets such as ravioli, tortellini, spaghetti, spaeztle, Chinese dumplings, Chinese potstickers, pierogies (also pirogies), empanadas, tamales, etc., which may be filled or unfilled.

Refrigeration is a preserving process that includes chilling dough compositions and dough products. For example, refrigeration can include storing dough compositions and dough products at refrigeration temperatures, e.g., below about 45 or 40 degrees F without freezing, e.g., between 0°C and about 4°C. While refrigeration generally is an effective preservation approach, dough compositions and dough products may be vulnerable to temperature abuse or damaged packaging. In particular, temperature abuse typically results from an improper (excessively high) storage temperature that may result in the growth of undesirable bacteria. Growth of undesirable bacteria may or may not produce visible signs of spoilage. Dough compositions and dough products may be vulnerable to temperature abuse or packaging damage at any point in the supply chain between manufacturers, distributors, retailers, and consumers.

Pasteurization is a preserving process that includes heating a dough composition or dough product for a sufficient time and to a sufficient temperature to significantly reduce in number, undesirable microorganisms. Even though certain dough compositions and dough products may be pasteurized, certain toxic bacteria may form spores that resist destruction by pasteurization, and post-pasteurization contamination may occur.

There is an ongoing need to enhance the ability to preserve dough compositions or dough products (i.e., increase shelf-life), e.g., by providing new dough formulations and processing methods, alone or in combination with refrigeration or pasteurization.

EP-A-1 230 861 describes a stabilized pasta composition comprising flour (55 to 80%), dough conditioner (e.g. ascorbic acid), nisin-containing cultured whey. The suitable shaped pasta includes macaroni, spaghetti, filled pasta products. The pasta products (filled or not filled) may be pasteurized before or after packaging. After packaging, the pasta can be stored under refrigeration. Tables 3 and 4 of D6 indicate a pH below 6 for the stabilized pasta.

EP-A-0 807 386 describes an acidified pasta by adding an encapsulated acid in the dough composition. The pasta may be pasteurized after packaging. The pH of the product is above 6 before steam cooking and below 6 after steam cooking.

WO 03/005963 describes an antibacterial composition including propionibacterial metabolites in combination with two or more of the following: a lantibiotic (e.g. nisin or lacticin), a lytic enzyme and an organic acid or its salt. The food products which may be treated with these antibacterial composition are: ready to eat meals, entrees, meats, deli salads, dressings, sauces and condiments, pastas, soups and aseptically packaged foods.

Dough compositions that include all-natural ingredients, e.g., natural preservatives, without added artificial chemical preservatives, can be particularly desirable to consumers.

The invention relates to the dough products according to claim 1 or 5 and to the method of making a pasteurized dough composition according to claim 14.

The invention describes to the use of natural antimicrobial agent to increase shelf-life of certain types of dough compositions and dough products, including refrigerated, pasteurized dough products. (As used herein, "dough composition" refers to cooked or uncooked doughs generally in any form, and "dough product" refers to a food product that contains a cooked or uncooked dough composition further processed and formed into a food product)

According to the invention the use of a natural antimicrobial agent in combination with an encapsulated organic acid is described. When a natural antimicrobial agent is used in combination with an acid, the acid can provide a suitable pH of the dough composition for the natural antimicrobial agent to be most effective, e.g., a dough composition pH less than about 6. The organic acid can also act as an antimicrobial itself

Dough products of the invention can include relatively dense dough composition, e.g., having a relatively high flour content (e.g., 50 to 80 wt% based on the total weight of the dough composition), and can include filled dough products such as dumplings, ravioli, tortellini, Chinese dumplings, Chinese potstickers, pierogi (also pirogi), tamales, empanadas, etc., or non-filled dough products such as spaghetti and spaeztle.

The term "relatively dense" refers to dough products that cook to a cooked dough product having a relatively high cooked density within the broad range of cooked dough product densities; examples of such dough products include pastas and pasta-like dough products that typically have a relatively high flour content and that cook to a consistency of a cooked noodle or pasta. These types of dough products can be distinguished from other dough products that have a lower cooked density, such as baked or fried bread doughs and pastries. A relatively dense dough product, for example, may have a raw specific volume that is similar to many different types of dough compositions, including raw bread doughs (e.g., a raw specific volume in the neighborhood of about 1 cc/gram, or from 0.6 to 1.4 cclgram), but can have a cooked specific volume that is generally lower than a cooked bread dough or pastry, e.g., a cooked specific volume in the range from about 1 to 2 cubic centimeters per gram for a relatively dense dough product.

Applicants have also discovered that encapsulated acid may be particularly useful in a dough composition of the invention. The use of an encapsulated organic acid/can allow the acid to be released and affect the pH of the dough composition at a desired or convenient time during processing, storage, or cooking. In certain preferred embodiments of the invention, the encapsulated acid can remain encapsulated during processing, to maintain a relatively neutral pH during processing, e.g., greater than 6 or 7. A neutral pH has been found to prevent a loss of strength of a dough composition sometimes associated with a more acidic dough composition pH, e.g., a pH less than approximately 6. Preferred dough compositions can maintain sufficient strength and mechanical properties to allow automated or semi-automated processing of the dough composition using standard dough processing equipment, including sheeting equipment, compounding equipment, and extruding equipment, to form the dough composition into a dough product.

Thus, embodiments of the invention relate to the use of encapsulated organic acid in a dough composition as described herein, e.g., for use in a filled or a relatively dense dough product. Use of encapsulated organic acid prevents the acid from absorbing into a dough composition during processing, thereby preventing a reduction in dough pH during processing that may reduce the strength of the dough. The encapsulated organic acid can provide a suitable dough composition pH during processing, e.g., a pH that maintains the strength of the dough composition, e.g., pH of about 7, preferably an approximately neutral pH such as from 6.5 to 7.5. Also preferably, an encapsulated acid can achieve a dough composition that after processing, i.e., after exposure of the acid to the dough, exhibits a more acidic pH that in combination with a natural antimicrobial agent can enhance shelf-life of the dough composition during storage. Thus, following formation of a dough composition or a dough product containing encapsulated acid, preferred methods of the invention can include a pasteurization or other heating step to degrade (e.g., melt) the barrier material of the encapsulated acid particles. Upon melting of the barrier material, the acid becomes exposed to the dough composition and provides a suitable dough composition pH for refrigerated storage, e.g., a pH that improves effectiveness of a natural antimicrobial agent, such as a pH below 6, e.g., from 4 to 5.

The dough compositions of the invention contain a natural antimicrobial agent in combination with an encapsulated organic acid. In addition to improved processing based on pH, an improved or synergistic effect has also been identified when using a natural antimicrobial agent in combination with an acid. The effect is improved shelf life, e.g., refrigerated storage stability of greater than 10 days, e.g., up to or in excess of 21 or 28 days. These extended shelf lifes are substantially greater than would be achieved by the use of either an acid or a natural antimicrobial agent alone.

A dough composition of the invention may be used to prepare a variety of dough products. Preferred dough products include filled or unfilled, relatively dense dough products, e.g., filled dough products including pierogies, dumplings, ravioli, tortellini, Chinese dumplings, Chinese potstickers, empanadas, tamales, and the like, that include a dough composition and filling. Advantageously, according to the invention, these and other types of preferred dough compositions and dough products can preferably be made of all-natural ingredients.

Methods of making dough compositions and dough products of the invention include the use of one or more of a natural antimicrobial agent, an encapsulated organic acid, and optionally an organic acid. In a particularly Preferred embodiment of the invention, an all-natural dough composition can be prepared to include a natural antimicrobial agent and an encapsulated organic acid. After combining these and other ingredients to provide a raw dough composition, the dough composition may preferably be processed using any of a variety of processing steps such as sheeting, extruding, cutting, filling, and folding, to provide a particular type of dough product. The dough composition or product is then pasteurized, to degrade or melt the barrier material of the encapsulated organic acid and to expose the acid to the dough. This reduces the pH of the dough for refrigerated storage, preferably to a pH that improves effectiveness of the natural antimicrobial agent, e.g., a pH below about 6. The dough may be stored at refrigerate temperatures and preferably maintains a pH of less than about 6 during storage. The ough compositions of the invention that contain a natural antimicrobial agent and organic acid can exhibit an improved shelf life relative to similar compositions that do not include organic acid in combination with a natural antimicrobial agent, the improved shelf life being at least 10 days, preferably 21 or 28 days or more when refrigerated.

The invention relates to dough compositions and dough products. Dough compositions typically include at least water and a grain constituent. A grain constituent may contribute to the structure of the dough composition. Certain preferred dough compositions prepared according to the invention may include flour in a relatively high amount, to provide a relatively high density cooked dough product, e.g., an amount of flour to provide a thick, dense, leavened or unleavened cooked dough product having a consistency of a cooked noodle or pasta.

Some examples of different types of relatively dense dough compositions include filled dough products such as dumplings, ravioli, tortellini, Chinese dumplings, Chinese potstickers, pierogies, tamales, empanadas, etc., and non-filled dough products such as spaghetti, other pastas or noodles, spaeztle, etc. Such dough compositions can typically be cooked to a cooked dough product by boiling, frying, baking, steaming, or microwaving.

Useful amounts of flour for such dough compositions can be relatively high compared to lower density dough compositions. Exemplary amounts of flour can be in the range from about 50 weight percent to about 80 weight percent flour based on the total weight of the dough composition, with a preferred range being from about 55 weight percent to about 65 weight percent by total weight of the dough composition. Useful dough compositions of the invention may also include water in a useful amount, e.g., in an amount in the range from about 15 weight percent to about 35 weight percent, by total weight of the dough composition, with a particularly preferred range being from about 20 to about 30 weight percent.

Different grain constituents can be selected to lend different texture, taste, and appearance to a cooked dough product. Suitable grain constituents include flours, germ, and bran from wheat, oats, rye, sorghum, barley, rice, millet, corn, and others. Suitable flours include hard wheat flour, soft wheat flour, corn flour, high amylose flour, low amylose flour, and the like. For pierogies, a soft wheat flour may be preferred. Other types of dough products may use other types of flour depending on desired taste and texture, as will be understood by those of skill. As an example, Chinese dumplings may include a harder wheat flour for a firmer bite.

The dough composition may also include any number of a variety of known additives for known uses. Exemplary additives include, e.g., salt, shortening, emulsifiers, dough composition-developing agents, nutritional supplements, flavorings, leavening agents (chemical leavening agents or yeast), and the like. Preferred dough compositions of the invention can be all-natural, which, as used in the food arts, means that no synthetic or artificial chemicals or non-natural ingredients, additives, or preservatives are included.

Dough compositions according to the invention preferably include a natural antimicrobial agent. A "natural antimicrobial agent" means a naturally derived antimicrobial agent used to stabilize food items naturally. Useful natural antimicrobial agents may reduce or eliminate certain yeasts, molds, bacteria, and combinations thereof. Preferred natural antimicrobial agents may include one or more secondary fermentation by-products of a bacteria derived by the bacteria metabolizing an organic substrate such as a protein (e.g., a dairy protein), a sugar, or a fat.

Preferred natural antimicrobial agents can include fermentation by-products of dairy proteins and other substrates. In general, such fermentation by-products capable of being used as natural antimicrobial agents can be produced by combining a substrate and a suitable amount of biological bacteria cells in amounts and in an environment that allow fermentation of the substrate by the bacteria to produce an antimicrobial by-product. Exemplary fermentation by-products used as natural antimicrobial agents include organic acids, lantibiotics, Pediococcus bacterial metabolite, lacticin (e.g., Lacticin 3147; see, U.S. Pat. No. 6,207,411), and similar materials. According to the present invention, the filled dough product of claim 1, the relatively dense dough product of claim 5 and the method of claim 14 comprise lantibiotics as a natural antimicrobial agent.

Exemplary lantibiotics include nisin, subtilin, pep 5, epidermin, mutacin (see, U.S. Pat. No. 5,932,469), gallidermin, cinnamycin, Ro09-0198, duramycin, and ancovenin. A particularly preferred lantibiotic is nisin, which is a polypeptide and may be soluble in aqueous environments. Nisin can be produced, for example, by fermentation of the bacterium *Lactococcus lactis* in a milk-based medium.

Natural antimicrobial agents such as nisin are commercially available as natural antimicrobial compositions that include the active antimicrobial agent (e.g., nisin) in combination with other ingredients used to prepare the nisin. The other ingredients could include residual bacteria cells, residual substrate, and other by-products. One source of natural antimicrobial compositions is Aplin and Barrett, Ltd., Beaminster, Dorset, UK, who sell a product under the trade name NISAPLIN. NISAPLIN may provide nisin in an all-natural composition including approximately 2.5% nisin, 77.5% sodium chloride, 12% protein, 6% carbohydrate, and 2% moisture. This exemplary commercial product composition is not limiting, and other compositions that contain nisin or other natural antimicrobial agents, in different amounts and with different co-ingredients, can also be useful according to the invention. Other examples of commercially available natural antimicrobial materials include Microgard from Rhodia of Cranberry, NJ; and Alta from Quest of Hoffman Estates, IL.

The amount of the antimicrobial agent composition used in a dough product of the invention (containing antimicrobial agent in combination with other ingredients used to prepare the antimicrobial agent) can be any amount that provides sufficient antimicrobial action to improve shelf life of a dough composition. When the antimicrobial agent is included as Microgard, an amount of Microgard that will function to provide a desired shelf life may be from about 0.5 weight percent to about 10 weight percent Microgard based on the total dough weight of dough composition, e.g., from 1.0 to 5.0 weight percent. A preferred range for Microgard may be from about 1 weight percent Microgard to about 1.5 weight percent, based on the total weight of the dough composition.

Natural antimicrobial agents such as Nisin can tend to be stable and most effective in acidic dough compositions, for example in a dough composition having a pH of less than about 6, preferably from about 4 to about 6. Thus, preferred dough compositions of the invention can include a natural organic acid that maintains the pH of the dough composition in this relatively acidic range during storage, to improve the antimicrobial action of the natural antimicrobial agent during refrigerated storage, and thereby increase shelf life of the dough composition. Preferred dough compositions of the invention, containing natural antimicrobial agent in combination with organic acid, may provide a shelf life in excess of 10 days, preferably at least about 21 or 28 days. Such an increased shelf life can most preferably be achieved according to the invention by use of a natural antimicrobial agent in combination with an encapsulated organic acid, pasteurization, and then refrigeration.

Any acid can be used to affect pH of a dough composition as described herein, including organic and inorganic acids. Organic acids can be useful and preferred because they are natural and therefore allow for an all-natural dough composition. Preferred organic acids for use in dough compositions of the invention may be any useful organic acid such as citric acid, lactic acid, malic acid, acetic acid, fumaric acid, tartaric acid, sorbic acid, ascorbic acid, phosphoric acid, propionic acid, adipic acid, caprylic acid, succinic acid, benzoic acid, or any combination thereof. Methods of making or isolating and purifying organic acids are well known, and organic acids are commercially available.

According to preferred embodiments of the invention, an acid such as an organic acid may be included in a dough composition in an amount to provide a dough composition pH that allows a natural antimicrobial agent to be effective to increase shelf life, preferably to give a dough composition shelf life in excess of 10 days, 21 days, or 28 days. A suitable pH may depend on several factors including the type of natural antimicrobial agent in the dough composition (if such an agent is used), types of additives (if any) used in the dough composition, and whether or not an added acid is the sole means affecting pH. A preferred pH can be less than about 6, e.g., from about 4 to about 6, more preferably from about 4.5 to about 5.5.

Organic acid may be introduced into a dough composition as either an encapsulated organic acid or a non-encapsulated organic acid. According to the present invention, an encapsulated organic acid is used. An encapsulated organic acid includes an organic acid typically in the form of solid particles of organic acid coated by or enrobed in a degradable barrier material so the barrier material prevents contact between the acid and the rest of the dough composition. The barrier material reduces or prevents contact between the organic acid and the rest of the dough composition until a desired time or condition of processing or use, such as during pasteurization, upon which time or condition the barrier material can degrade or melt and expose the acid to the dough so the acid can dissolve and alter (i.e., decrease) dough pH.

Suitable barrier materials may be degradable at a known temperature above a temperature used for processing a dough composition. This means that upon exposure to such temperature, the barrier material can break, melt, disintegrate, break down, or otherwise be removed from separating the organic acid from the dough composition, thereby allowing the acid to dissolve and cause the dough composition to reach a desired pH. Examples of useful barrier materials include fats, and vegetable oils, including soybean oil, cotton oil, palm kernel oil, canola oil, or any other oils, especially high lauric acid triglyceride-containing oils. Preferred barrier materials can be selected to melt during pasteurization of the dough composition, which typically may take place at from 120 to 180 degrees F. Particularly preferred melting points may be from 152 to 158 F. Preferred barrier materials include palm oil and canola oil.

Acids encapsulated by different barrier materials are known in the baking arts, and can be produced by known methods such as by spray coating, spray drying and by fluidized bed coating. See, for example, Applicants' United States patent application serial number 09/945,204, filed August 31, 2001, and entitled "Chemically Leavened Doughs and Related Methods." A variety of such encapsulated particles are known and commercially available, including some acids that take the form of crystals, and others that may be more amorphous. Acids that take the form of uniform crystals can sometimes be preferred as easier to encapsulate. One example of a preferred encapsulated organic acid is citric acid.

The amount of barrier material relative to coated acid particles can be any amount that is useful, e.g., to separate the acid from the dough and thereby maintain a desired dough pH prior to pasteurization. Preferably, the barrier material can be substantially uniformly coated over smaller particulates of solid acid, creating a barrier material layer that preferably substantially completely covers the particulate surface. The thickness of the layer of barrier material can be a thickness that allows for adequate protection and release of the acid. If too thin of a layer of barrier material is used, the barrier material may wear off in processing and release acid prematurely. If too thick of a layer is used, acid may not release during pasteurization because of the thick layer. Overall size of encapsulated acid particles may also be selected based on performance. The particles may preferably be not so large that they become crushed during processing of the dough composition or dough product. An example of a useful particle size is 1.25 mm diameter or below, although larger or smaller sizes may also be useful.

Encapsulated organic acid is commercially available from sources that include Balchem, of Slate Hill, NY, USA.

According to certain embodiments of the invention, encapsulated acid may be combined with dough ingredients by known methods of mixing or combining, and preferably by avoiding conditions that would break, fracture, or degrade the barrier material, or otherwise damage encapsulated particles. The acid can preferably be kept in an encapsulated state during early stages of preparing the dough composition and forming the dough composition into a dough product. While the acid is encapsulated, the acid does not substantially become exposed to the bulk dough composition and does not dissolve or otherwise substantially reduce the pH of the dough composition. This maintains the pH of the dough composition at a pH that results in a dough composition that is strong enough to be processed, e.g., by sheeting, extruding, or other automated or semi-automated dough processing techniques.

According to the invention, it has been found that if pH of a dough composition (e.g., a relatively high density dough composition as described herein) becomes too acidic during processing, e.g., due to the presence of an acid, the dough composition may lose strength and become too weak to process, e.g., by sheeting, extruding, or other automated or semi-automated processes. A dough pH that is able to retain good strength for processing can preferably be substantially non-acidic, preferably having a near-neutral pH, e.g., a pH from about 6.5 to about 7.5. This pH range has been found to maintain the strength and mechanical properties of a dough composition so the dough composition may be processed using automated or semi-automated and optionally high-speed equipment.

As an example, certain preferred relatively dense dough compositions of the invention that include a relatively high flour content (e.g., relatively dense pastas and filled dough products (pierogies, dumplings, etc.)), natural antimicrobial agent, and encapsulated organic acid, can preferably exhibit a Farinograph that is greater than 1500 bu, e.g., equal to or greater than 2000 bu, during processing prior to pasteurization. This strength can allow processing of the dough composition as described, and is believed to be attributable at least in part to the use of encapsulated acid to maintain a near-neutral pH that does not weaken the dough as would a reduced or more acidic pH. In comparison, dough compositions that are more acidic due to the presence of a non-encapsulated acid in similar amounts can have a Farinograph measurement of from 1,500 to 1,000 bu or below, and may be too weak to process as desired.

After processing to form a desired dough composition or dough product, further processing may be performed to expose the encapsulated organic acid to the dough composition, and thereby provide a reduced dough composition pH that facilitates refrigerated storage, e.g., that facilitates or improves performance of a natural antimicrobial agent. Preferably the dough can be heated or pasteurized to degrade the barrier material and expose the encapsulated organic acid to the dough, and the exposed acid then lowers the dough pH to a level that improves the effect of the natural antimicrobial agent. Optionally, the heating or pasteurization step can cook or partially cook the dough composition or dough product.

Methods of combining ingredients to prepare dough compositions are generally well known, and may be used to combine ingredients including one or more of a natural antimicrobial agent, an acid or organic acid (optionally encapsulated), and combinations thereof, to provide dough compositions according to the invention. Examples of useful equipment include horizontal bar mixers (preferred), pin mixers, vertical mixers, and the like.

Dough compositions of the invention may be processed to form any of a variety of dough products. For example, a dough composition may simply be formed and cut into a particular shape to provide a dough product. Alternatively, the dough composition may be sheeted, folded, cut, lapped, extruded, or processed in any other fashion to achieve a particular product form. Optionally and preferably, dough compositions of the invention may be combined with a filling to provide a filled dough product comprising the dough composition containing the filling. Exemplary relatively dense dough products that may be prepared as described herein include pastas such as ravioli, tortellini, spaghetti, spaeztle; dumplings such as potato dumplings, Chinese dumplings; Chinese potstickers, pierogi (also pirogi); empanadas, tamales, etc., among others.

Optional filling that may be included with a dough composition may include meat, vegetables, fruits, cheese, mushrooms, potatoes, and combinations thereof. Typical meat fillings may includes beef, chicken, turkey, or pork. Such meat fillings may be in any suitable form, including ground form. Typical non-meat fillings may include potatoes (e.g., sweet potato, mashed potatoes), cabbage (e.g., sauerkraut), spinach, or other vegetables. Typical cheese fillings may include farmer's cheese, cottage cheese, or other cheeses. Exemplary combinations of fillings include, e.g., potato and cheese, cabbage and mushroom, spinach and cheese, and sauerkraut and mushroom.

A filling used according to the invention may also include natural antimicrobial agent and organic acid, and combinations thereof. While encapsulated organic acid may be used in fillings, encapsulation may normally be unnecessary. Exemplary pH ranges for different types of fillings may be in the range from 5.5 to 5.6 for meat fillings, and from 4 to 5 for cheese and cabbage fillings. Preferably, dough products using a dough composition of the present invention with a filling, can also be all-natural.

Steps that can be used in forming a dough composition into a dough product include folding, sheeting, cutting, extruding, forming, filling, etc., and other well known steps of forming dough products, e.g., filled dough products, and are preferably done at a non-acidic, e.g., near neutral dough composition pH, e.g., a pH that is greater than 6, especially in the range from 6.5 to 7.5. Methods of processing dough compositions into a filled or unfilled dough product are well known. For example methods of forming dough compositions and combining dough compositions with fillings (see, U.S. Pat. No. 4,996,914) are well known and may be used with dough compositions of the present invention.

According to one specific embodiment, a dough composition or dough product, after processing and formation of the dough product, may be processed by heating or pasteurization. Pasteurization or heating can raise the dough composition to a temperature that may or may not cause the dough composition to fully or partially cook, but that is sufficient to substantially reduce the number of undesirable microorganisms. This can be accomplished, for example, by heating the dough composition to a temperature in the range from about 160 F to about 170 F, for a time period from of from about 2 to about 3 minutes. Other temperature ranges and processing periods may also be useful, as will be understood by the skilled artisan. With preferred embodiments of the invention that contain encapsulated organic acid, heating or pasteurization can preferably also cause the encapsulated acid to become exposed to the dough composition, where the acid will dissolve in the dough composition and reduce pH to a range that enhances the ability of the natural antimicrobial agent to fight microbial matter, e.g., to a pH of no greater than 6.

Preferred dough compositions and dough products of the invention can be stored at refrigerated temperatures, with good shelf life. Methods of refrigeration are well known, and may include chilling a dough composition to a temperature equal to or less than about 4°C, e.g., from greater than about 0 degrees to about 4 degrees C.

Dough compositions and dough products of the invention may be suitably packaged and stored under refrigerated conditions. Such dough compositions and dough products may be removed from refrigerated storage at a later time and may be further processed (e.g., baked, fried, boiled, microwaved, steamed, etc.), if needed, to provide a consumable food item.

The following is a single example of a dough composition that can be prepared according to the invention as an all-natural dough composition that contains encapsulated organic acid and natural antimicrobial agent. The dough can be used with a filling, to prepare a filled pierogie.

| **Pierogie Wrapper** | | | | |
|---|---|---|---|---|
| | Batch size | 0.75 lbs 340.5 gms | | |
| **Ingredient** | | **%** | **Wt lbs** | **Wt gms** |
| | | | | |
| Flour | | 58% | 0.435 | 197.49 |
| NFDM | | 8% | 0.06 | 27.24 |
| Egg | | 6% | 0.045 | 20.43 |
| Salt | | 1 % | 0.0075 | 3.405 |
| Water | | 25% | 0.1875 | 85.125 |
| Oil | | 2% | 0.015 | 6.81 |
| Natural Antimicrobial Composition* | | 0-3% | | |
| Encapsulated organic acid | | 0-2% | | |
| | | | | |
| | Totals | 100% | 0.75 | 340.5 |

| | | | | |
|---|---|---|---|---|
| ***This refers e.g., to MICROGARD, ALTA, NISAPLIN, etc.** Combine dry ingredients. Mix 1 minute on low. Add wet ingredients. Mix 1 minute on low. Mix 2 minutes on medium. | | | | |

## Claims

1. A filled dough product comprising a dough composition that comprises encapsulated organic acid and natural antimicrobial agent,

2. The dough product of claim 1 wherein the dough is a relatively dens dough having a cooked specific volume in the range from 1 to 2 cubic centimeters per gram.

3. The dough product of claim 1 wherein the dough product is a non-pasteurized pierogi or dumpling comprising a non-pasteurized dough composition that comprises encapsulated organic acid and natural antimicrobial agent, surrounding a non-pasteurized filling.

4. The dough product of claim 3 wherein the non-pasteurized filling comprises natural antimicrobial agent.

5. A relatively dense dough product having a raw specific volume of from 0.6 to 14 cc/g and comprising a dough composition that comprises encapsulated organic acid and natural antimicrobial agent, wherein the natural antimicrobial agent comprises a secondary fermentation by-product selected from lantibiotics .

6. The product of claim 5 wherein the dough product is selected from the group consisting of a dumpling, ravioli, tortellini, a pot sticker, a pierogie, a tamale, an empanada, spaghetti, a noodle, and spaeztle.

7. The product of claim 5 wherein the dough composition contains from 50 to 80 weight percent flour based on the weight of the dough composition.

8. The product of claim 7 wherein the dough composition contains from 55 to 65 weight percent flour.

9. The product of claim 5 wherein the dough composition has a cooked specific volume in the range from 1 cc/gram to 2 cc/gram.

10. The dough product of any of claims 1 to 9 wherein the organic acid is selected from the group-consisting of citric acid, lactic acid, malic acid, acetic acid, fumaric acid, tartaric acid, sorbic acid, ascorbic acid, phosphoric acid, propionic acid, adipic acid, caprylic acid, succinic acid, benzoic acid, and combinations thereof

11. The dough product of any of claims 1 to 10 wherein the dough composition comprises an amount of organic acid sufficient to achieve a dough composition pH below 6.

12. The dough product of any of claims 1 to 11 wherein the dough product is all-natural.

13. The dough product of any of claim 1 to 12 wherein the natural antimicrobial agent nisin.

14. A method of making a pasteurized dough composition, the method comprising:
providing a non-pasteurized dough composition comprising encapsulated organic acid and natural antimicrobial agent, and
pasteurizing the dough composition sufficiently to expose encapsulated acid to the dough composition and provide a dough composition having pH below about 6 at refrigerated temperatures,

15. The method of claim 14 wherein the non-pasteurized dough composition has a pH above 6.

16. The method of claim 14 comprising storing the dough composition product at refrigerated storage temperature.

17. The method of any of claim 16, wherein the dough composition has a shelf life in excess of 10 days.

18. The method of claim 17, wherein the dough composition has a shelf life of at least 21 days.

19. The method of any of claims 14 to 18, wherein the natural antimicrobial agent is nisin.

## Patentansprüche

1. Gefülltes Teigprodukt, umfassend eine Teigzusammensetzung, die verkapselte organische Säure und ein natürliches antimikrobielles Mittel umfasst, wobei das natürliche antimikrobielle Mittel ein sekundäres Fermentationsnebenprodukt umfasst, ausgewählt aus Lantibiotika.

2. Teigprodukt gemäß Anspruch 1, wobei der Teig ein vergleichsweise dichter Teig ist, der ein gekochtes spezifisches Volumen im Bereich von 1 bis 2 Kubikzentimeter pro Gramm aufweist.

3. Teigprodukt gemäß Anspruch 1, wobei das Teigprodukt ein(e) nichtpasteurisierte(r) Pirogge oder Kloß ist, umfassend eine nichtpasteurisierte Teigzusammensetzung, die verkapselte organische Säure und natürliches antimikrobielles Mittel umfasst und eine nichtpasteurisierte Füllung umgibt.

4. Teigprodukt gemäß Anspruch 3, wobei die nichtpasteurisierte Füllung natürliches antimikrobielles Mittel umfasst.

5. Vergleichsweise dichtes Teigprodukt mit einem spezifischen Rohvolumen von 0,6 bis 1,4 cm³/g, umfassend eine Teigzusammensetzung, die verkapselte organische Säure und ein natürliches antimikrobielles Mittel umfasst, wobei das natürliche antimikrobielle Mittel ein sekundäres Fermentationsnebenprodukt umfasst, ausgewählt aus Lantibiotika.

6. Produkt gemäß Anspruch 5, wobei das Teigprodukt ausgewählt ist aus der Gruppe, bestehend aus einem Kloß, Ravioli, Tortellini, einem Potsticker, einer Pirogge, einer Tamale, einer Empanada, Spagetti, einer Nudel und Spätzle.

7. Produkt gemäß Anspruch 5, wobei die Teigzusammensetzung 50 bis 80 Gewichtsprozent, bezogen auf das Gewicht der Teigzusammensetzung, Mehl enthält.

8. Produkt gemäß Anspruch 7, wobei die Teigzusammensetzung 55 bis 65 Gewichtsprozent Mehl enthält.

9. Produkt gemäß Anspruch 5, wobei die Teigzusammensetzung ein gekochtes spezifisches Volumen im Bereich von 1 cm³/Gramm bis 2 cm³/Gramm aufweist.

10. Teigprodukt gemäß einem der Ansprüche 1 bis 9, wobei die organische Säure ausgewählt ist aus der Gruppe, bestehend aus Citronensäure, Milchsäure, Äpfelsäure, Essigsäure, Fumarsäure, Weinsäure, Sorbinsäure, Ascorbinsäure, Phosphorsäure, Propionsäure, Adipinsäure, Caprylsäure, Bernsteinsäure, Benzoesäure und Kombinationen davon.

11. Teigprodukt gemäß einem der Ansprüche 1 bis 10, wobei die Teigzusammensetzung eine Menge an organischer Säure umfasst, die ausreicht, um einen pH-Wert der Teigzusammensetzung unter 6 zu erzielen.

12. Teigprodukt gemäß einem der Ansprüche 1 bis 11, wobei das Teigprodukt vollständig natürlich ist.

13. Teigprodukt gemäß einem der Ansprüche 1 bis 12, wobei das natürliche antimikrobielle Mittel Nisin ist.

14. Verfahren zum Herstellen einer pasteurisierten Teigzusammensetzung, wobei das Verfahren umfasst:
Bereitstellen einer nichtpasteurisierten Teigzusammensetzung, umfassend verkapselte organische Säure und ein natürliches antimikrobielles Mittel, und
ausreichendes Pasteurisieren der Teigzusammensetzung, um die verkapselte Säure gegenüber der Teigzusammensetzung zu exponieren und eine Teigzusammensetzung mit einem pH-Wert unter etwa 6 bei gekühlten Temperaturen zu ergeben,
wobei das natürliche antimikrobielle Mittel ein sekundäres Fermentationsnebenprodukt umfasst, ausgewählt aus Lantibiotika.

15. Verfahren gemäß Anspruch 14, wobei die nichtpasteurisierte Teigzusammensetzung einen pH-Wert über 6 aufweist.

16. Verfahren gemäß Anspruch 14, umfassend das Lagern des Teigzusammensetzungsprodukts bei gekühlter Lagerungstemperatur.

17. Verfahren gemäß Anspruch 16, wobei die Teigzusammensetzung eine Haltbarkeitsdauer über 10 Tagen aufweist.

18. Verfahren gemäß Anspruch 17, wobei die Teigzusammensetzung eine Haltbarkeitsdauer von wenigstens 21 Tagen aufweist.

19. Verfahren gemäß einem der Ansprüche 14 bis 18, wobei das natürliche antimikrobielle Mittel Nisin ist.

## Revendications

1. Produit à base de pâte fourré comprenant une composition de pâte qui comprend un acide organique encapsulé et un agent antimicrobien naturel, l'agent antimicrobien naturel comprenant un sous-produit de fermentation secondaire choisi parmi les antibiotiques.

2. Produit à base de pâte selon la revendication 1, **caractérisé en ce que** la pâte est une pâte relativement dense ayant un volume spécifique après cuisson dans la gamme de 1 à 2 centimètres cubes par gramme.

3. Produit à base de pâte selon la revendication 1, **caractérisé en ce que** le produit à base de pâte est un pierogi ou une boulette non pasteurisé comprenant une composition de pâte non pasteurisée qui comprend un acide organique encapsulé et un agent antimicrobien naturel, entourant un fourrage non pasteurisé.

4. Produit à base de pâte selon la revendication 3, **caractérisé en ce que** le fourrage non pasteurisé comprend un agent antimicrobien naturel.

5. Produit à base de pâte relativement dense ayant un volume spécifique avant cuisson de 0,6 à 1,4 cc/g et comprenant une composition de pâte qui comprend un acide organique encapsulé et un agent antimicrobien naturel, l'agent antimicrobien naturel comprenant un sous-produit de fermentation secondaire choisi parmi les antibiotiques.

6. Produit selon la revendication 5, **caractérisé en ce que** le produit à base de pâte est choisi dans le groupe constitué de boulette, de ravioli, de tortellini, de potsticker, de pierogi, de tamale, d'empanade, de spaghetti, de nouilles et de spaetzle.

7. Produit selon la revendication 5, **caractérisé en ce que** la composition de pâte contient de 50 à 80 pour cent en poids de farine sur la base du poids de la composition de pâte.

8. Produit selon la revendication 7, **caractérisé en ce que** la composition de pâte contient de 55 à 65 pour cent en poids de farine.

9. Produit selon la revendication 5, **caractérisé en ce que** la composition de pâte a un volume spécifique après cuisson dans la gamme de 1 cc/gramme à 2 cc/gramme.

10. Produit à base de pâte selon l'une quelconque des revendications 1 à 9, **caractérisé en ce que** l'acide organique est choisi dans le groupe constitué d'acide citrique, d'acide lactique, d'acide malique, d'acide acétique, d'acide fumarique, d'acide tartrique, d'acide sorbique, d'acide ascorbique, d'acide phosphorique, d'acide propionique, d'acide adipique, d'acide caprylique, d'acide succinique, d'acide benzoïque, et des combinaisons de ceux-ci.

11. Produit à base de pâte selon l'une quelconque des revendications 1 à 10, **caractérisé en ce que** la composition de pâte comprend une quantité d'acide organique suffisante pour obtenir un pH de la composition de pâte inférieur à 6.

12. Produit à base de pâte selon l'une quelconque des revendications 1 à 11, **caractérisé en ce que** le produit à base de pâte est tout biologique.

13. Produit à base de pâte selon l'une quelconque des revendications 1 à 12, **caractérisé en ce que** l'agent antimicrobien naturel est la nisine.

14. Méthode de fabrication d'une composition de pâte pasteurisée, la méthode comprenant :
l'obtention d'une composition de pâte non pasteurisée comprenant un acide organique encapsulé et un agent antimicrobien naturel, et
la pasteurisation de la composition de pâte suffisamment pour exposer l'acide encapsulé à la composition de pâte et obtenir une composition de pâte ayant un pH inférieur à environ 6 aux températures de réfrigération,
l'agent antimicrobien naturel comprenant un sous-produit de fermentation secondaire choisi parmi les antibiotiques.

15. Méthode selon la revendication 14, **caractérisée en ce que** la composition de pâte non pasteurisée a un pH supérieur à 6.

16. Méthode selon la revendication 14, comprenant le stockage du produit à base de composition de pâte à une température de stockage au réfrigérateur.

17. Méthode selon la revendication 16, **caractérisée en ce que** la composition de pâte a une durée de conservation de plus de 10 jours.

18. Méthode selon la revendication 17, **caractérisée en ce que** la composition de pâte a une durée de conservation d'au moins 21 jours.

19. Méthode selon l'une quelconque des revendications 14 à 18, **caractérisée en ce que** l'agent antimicrobien naturel est la nisine.
